# EUROPEAN PATENT SPECIFICATION

(11) **EP 2 306 703 B1**
(45) Date of publication and mention of the grant of the patent: **22.08.2012**
(21) Application number: 10167167.5
(22) Date of filing: 24.06.2010
(51) Int. Cl.: H04N 21/433, H04N 21/4147, H04N 21/8352, H04N 21/4627, H04N 21/4335, H04N 21/426

(54) **Digital broadcast receiving apparatus and signal processing method**
Digitale Rundfunkempfangsvorrichtung und Signalverarbeitungsverfahren
Appareil numérique de réception de diffusion et procédé de traitement de signaux

(30) Priority: 30.09.2009 JP 2009228123
(43) Date of publication of application: 06.04.2011
(73) Proprietor: Kabushiki Kaisha Toshiba, Tokyo 105-8001 (JP)
(72) Inventor: Machida, Satoshi, Tokyo 105-8001 (JP)
(74) Representative: HOFFMANN EITLE

(56) References cited:
- WO-A1-2008/034002
- WO-A2-02/093299
- US-A- 5 822 782
- US-A1- 2005 138 658

## Description

Embodiments described herein relates generally to a recording and reproducing apparatus and a recording method that can simultaneously record and reproduce at least two programs.

There are many options of program (content) sources including video and sound in conventional terrestrial analog broadcasting, terrestrial digital broadcasting that is becoming widespread, or satellite broadcasting. The spread of high-speed communication networks increases the number of distributors that distribute programs by a wired system and sources (entities) that take a form in which a user is caused to obtain opened programs on the network.

Because of these backgrounds, there is increased a demand for receiving the programs that are desired by the user and provided by at least two sources at the same time or in a manner in which time slots partially overlap each other. Further, multi-channel video-recording in which at least two programs provided in the same time slot are sequentially video-recorded is becoming common .

Japanese Patent Application Publication (KOKAI) No. 2002-165146 (reference 1) discloses plural tuner units are provided, and data received by the tuner unit is stored in each storage unit that is provided corresponding to the tuner unit.

Japanese Patent Application Publication (KOKAI) No. 2007-96368 (reference 2) discloses plural tuner units are provided, and pieces of program data of simultaneously received plural channels are temporarily stored in a recording unit.

Both of the above references disclose that the programs received by the plural tuner units are simultaneously recorded. However, the above references do not describe how to record a program having a size larger than a remaining recording capacity (free capacity) of each recording unit for the plural recording units.

Further, the above reference 1 does not suggest that data received by a tuner unit other than the corresponding tuner unit is stored in the recording unit having the free capacity.

WO 02/093299 A2 discloses that a system is provided that resources media content of multiple display channels. The system includes a memory with logic, tuning resources to receive media content of a plurality of display channels, buffering resources for buffering the media content, display resources for displaying the media content from at least one of the display channels, and a processor configured with the logic to determine when the resources are unavailable to receive media content of a newly requested display channel. The processor is further configured with the logic to, responsive to a determination of insufficient resources, determine the lowest priority display channel using at least one user configurable rule, wherein the processor is further configured with the logic to effect discontinuing the receipt of media content of a display channel designated as having the lowest priority among a plurality of received display channels. A system (16) includes a memory (349) with logic, tuning resources (345) to receive media content of a plurality of display channels, buffering resources (305) for buffering the media content, display resources (341) for displaying the media content from at least one of the display channels, and a processor (344) configured with logic to determine when the resources are unavailable to receive media content of a newly requested display channel. The processor (3414) is further configured with the logic, responsive to a determination of insufficient resources, to determine the lowest priority display channel using at least one user configurable rule, wherein the processor is further configured with the logic to effect discontinuing the receipt of media content of a display channel designated as having the lowest priority among a plurality of received display channels.

According to a first aspect of the invention, there is provided a recording and reproducing apparatus as set out in Claim 1.

According to a second aspect of the invention, there is provided a recording method as set out in Claim 7.

A general architecture that implements the various features of the embodiments will now be described with reference to the drawings. The drawings and the associated descriptions are provided to illustrate embodiments and not to limit the scope of the embodiments.
FIG. 1. is an exemplary diagram showing an example of a configuration of a recording and reproducing apparatus (receiving apparatus) according to an embodiment;
FIG. 2 is an exemplary diagram showing an example of a configuration of a CAS control module incorporated in the recording and reproducing apparatus of FIG. 1, according to an embodiment;
FIG. 3 is an exemplary diagram showing an example of uses (allocation in each recording method) of plural recording modules included in the recording and reproducing control module incorporated in the recording and reproducing apparatus of FIG. 1 and an example of function identification information managed by utilisation function determination information table', according to an embodiment;
FIG. 4 is an exemplary diagram showing an example of display example of display device of display output that is output to a display device (video display device) or an output end in the recording and reproducing apparatus of FIG. 1, according to an embodiment;
FIG. 5 is an exemplary diagram showing an example of display example of display device of display output that is output to a display device (video display device) or an output end subsequent to the display example of FIG. 4 in the recording and reproducing apparatus of FIG. 1, according to an embodiment;
FIG. 6 is an exemplary diagram showing an example of determination of a 'pairing function' between the recording modules of FIG. 3, according to an embodiment;
FIG. 7 is an exemplary diagram showing an example of a procedure for changing the use (allocation in each recording method) of the recording module between the recording modules of FIG. 3, according to an embodiment;
FIG. 8 is an exemplary diagram showing an example of a procedure for changing the use (allocation in each recording method) of the recording module between the recording modules of FIG. 3, according to an embodiment; and
FIG. 9 is an exemplary diagram showing an example of display of a "past program listing" that is utilized in order to refer to a 'video-recorded program' generated in changing the use (allocation in each recording method) of the recording module between the recording modules of FIG. 3, according to an embodiment.

Embodiments will now be described hereinafter in detail with reference to the accompanying drawings.

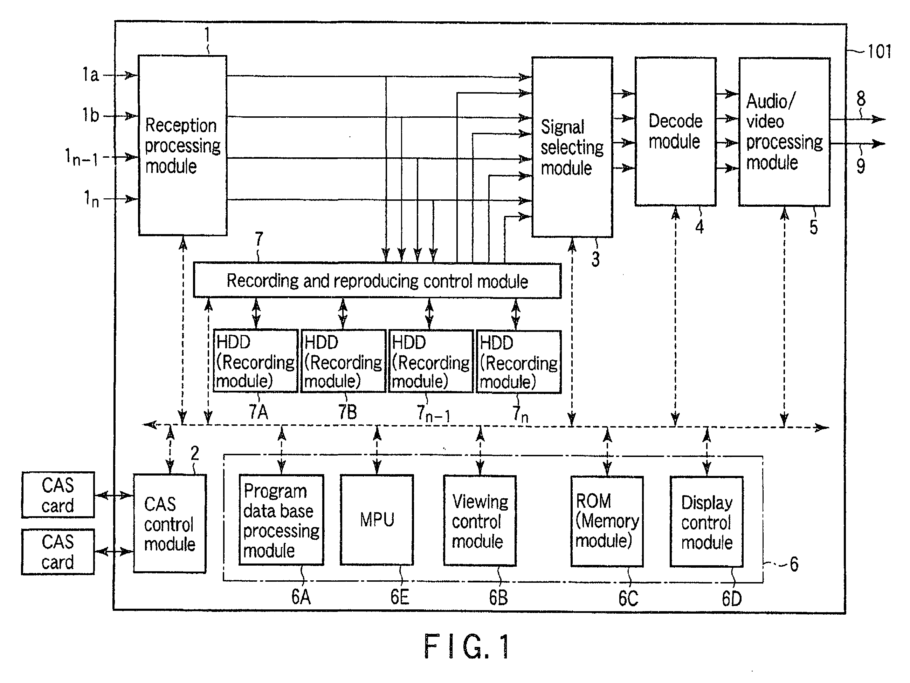

FIG. 1 schematically illustrates a configuration of a recording and reproducing apparatus (receiving apparatus) according to an embodiment. The recording and reproducing apparatus of FIG. 1 is a recorder in which a recording medium having a predetermined capacity is incorporated. The recording and reproducing apparatus receives assorted content provided by sources (hereinafter referred to as a Conditional Access System [CAS]) such as terrestrial analog broadcasting, terrestrial digital broadcasting, satellite digital broadcasting, and a distributor (cable television provide) that distributes programs by cable, and outputs a reproducing signal while being able to record content (stream) of the user's choice with image quality and sound quality of the user's choice. The content (stream) includes video, speech, and music, and is widely referred to as 'programs'. The video also includes a moving image, a still image, text broadcasting mainly containing text, and data broadcasting. The recording and reproducing apparatus may be a set-top box (STB) that receives a program mainly distributed from a broadcasting base (delivery) station of the cable television entity. The recording and reproducing apparatus may be a television receiver integrally including a display device. In addition, the systems described herein can be implemented as software applications, hardware and/or software modules, or components on one or more computers, such as servers. While the various modules are illustrated separately, they may share some or all of the same underlying logic or code.

A recording and reproducing apparatus 101 of FIG. 1 includes a reception processing module 1, a CAS control module 2, a signal selection module 3, a decode module 4, an audiovisual (A/V) output module 5, and a main control module 6. The reception processing module 1 receives signals input from inputs 1a, 1b, ... , In-1, and In (n is a positive integer). The CAS control module 2 selects a CAS card (identification mechanism in which an ID [identification code] is recorded in order to identify the user) from content (program) received by the reception processing module 1 based on identification information prepared by a source of the content. The signal selection module 3 outputs the received content as a signal that can be displayed on the display device. The main control module 6 manages the delivery and receipt of the signal between modules while controlling the decode module 4 and the A/V output module 5. The recording and reproducing apparatus 101 also includes a recording and reproducing control module 7 that records the received content upon a request from the user. As used herein, an element called "module" may be realized by hardware or software with a CPU (microcomputer).

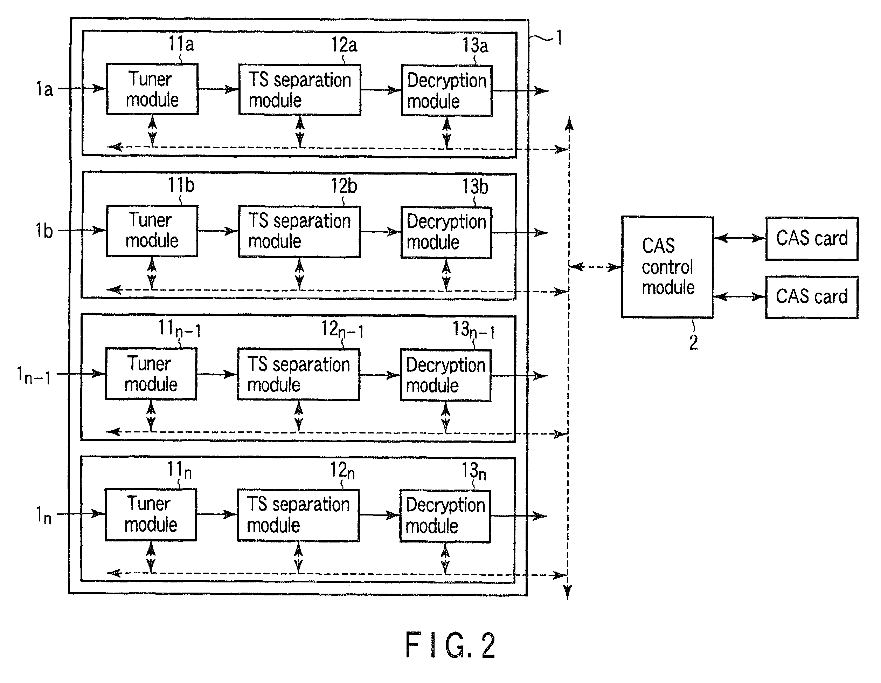

Although described in detail later with reference to FIG. 2, the reception processing module 1 includes tuner modules 1a, 1b, ... , In-1, and In (n is a positive integer), Transport Stream (TS) separation modules 1a, 1b, ... , 1n-1, and In, and decryption modules 1a, 1b, ... , 1n-1, and In. The tuner module tunes a predetermined channel from the input signal. The TS separation module separates management information including information on a content source, that is, a CAS entity and contract information prepared by the CAS and the TS including content from the signal tuned by the tuner module. The decryption module unlocks (decrypts) an encryption key locked on the CAS side using identification information (CAS card) provided through the CAS control module 2 by the CAS, and obtains a video signal and a sound signal (Packetized Elementary Stream [PES]) of the content from the management information separated by the TS separation module.

The CAS control module 2 reads ID from the CAS card that retains an identification code (ID) prepared by the content source, that is, the CAS based on the contract information, and permits the user to receive (view) content. The receiving apparatus (recording and reproducing apparatus) that can receive the CAS is required to have an identification card (called a CAS card) prepared by the CAS. Plural kinds of CAS cards are prepared based on a business form of the source or distributor. For example, the CAS control module 2 can accommodate two CAS cards therein.

As is well known, the CAS card is pursuant to 'ARIB TR-B15' managed by 'Association of Radio Industries and Businesses (ARIB)', and the one CAS card can decrypt the two streams (unlock the encryption keys). Accordingly, in the CAS control module 2 of FIGS. 1 and 2, because the two CAS cards can be inserted, the four streams (channels) can be received at the maximum. The CAS card is also called a B-CAS card, and is classified into a first standard card called a blue card and a second standard card called a red card.

The first standard card (blue card) retains an ID [identification code] that can decrypt only the terrestrial digital broadcasting stream in which all the content is free.

The second standard card (red card) retains an ID [identification code] that can decrypt subscription and pay-per-view broadcasting. In addition to the terrestrial digital broadcasting stream, the second standard card can receive a stream (content) that is supplied by the CS digital broadcasting or the distributor through an optical fiber network. The second standard card (red card) can receive streams (content) currently provided by all the entities (red card is not subjected to the restrictions of the entity of the receiving target).

Although the detailed description is omitted because the main configuration and function are widely well known, the signal selection module 3 processes the signals supplied from the reception processing module 1 or recording and reproducing control module 7 according to a processing method defined in each signal such that the subsequent decode module 4 can decode the signals.

When the signal output from the reception processing module 1 is a satellite digital broadcasting signal that is provided from the satellite broadcasting, that is, a broadcasting satellite (BS) or a communications satellite (CS), content of the channel tuned by the tuner module is demodulated by a phase shift keying (PSK) demodulation module to extract the Transport Stream (TS), and the TS decode module performs decode processing (depacket). Therefore, the digital video signal and sound (audio) signal (PES) of the selected content are obtained.

When the signal output from the reception processing module 1 is a terrestrial digital broadcasting signal, content of the channel tuned by the tuner module is demodulated by an orthogonal frequency division multiplexing (OFDM) demodulation module to extract the TS, and the processing similar to that of the satellite broadcasting signal is performed.

When the signal output from the reception processing module 1 is a terrestrial analog broadcasting signal, content of the channel tuned by the tuner module is demodulated into an analog video signal and a sound (audio) signal by an analog demodulation module.

The signal output from the recording and reproducing control module 7 is a signal that is compressed based on the Moving Picture Experts Group MPEG-2 or -4 (H.264-AVC) standard (audio/sound is based on MEPG-2), and the signal is directly output to the subsequent decode module 4.

Although the detailed description is omitted because the main configuration and function are widely well known, the decode module 4 decodes the PES output from the signal selection module 3 and outputs the video signal and sound (audio) signal of the selected content. A digital-to-analog converter (not illustrated) converts the video signal and the sound (sound) signal into an analog signal, and the analog signal is supplied to the subsequent A/V output module 5. Section information, various kinds of data (service information), electronic program guide (EPG) information, program attribute information (such as a program category), and caption information, which are include in the TS, are extracted from the decoded signal. When the analog video signal and the sound (audio) signal are supplied from the signal selection module 3, the decode module 4 directly outputs the analog video signal and the sound (audio) signal to the subsequent A/V output module 5. In the decode module 4, the decoder (corresponding to the compression method) decodes the compressed signal from the recording and reproducing control module 7, and the digital-to-analog converter (not illustrated) converts the decoded signal into the analog signal and outputs the analog signal to the subsequent A/V output module 5.

Although the detailed description is omitted because the main configuration and function are widely well known, the A/V output module 5 includes a video processing module and an audio processing module. The video processing module produces video output that can be displayed (reproduced) by an externally-connected monitor device (display). The audio processing module outputs the audio output (including sound) that can be reproduced by an externally-connected audio (sound) reproducing device, that is, a speaker or a headphone. As to the video output, the digital video signal supplied from the decode module 4, the on-screen display (OSD) signal that is a manipulation guide or an error message produced by an OSD signal producing module, image (text) data produced in data broadcasting, and EPG data or a caption signal obtained from the TS are combined and output to a video output 8. As to the audio output, a previously-prepared guide (sound guide) is appropriately superimposed and output to an audio output 9 if needed. When a display device and a speaker are integrally provided like a television receiver, outputs of the video processing module and audio processing module are directly supplied.

Although not illustrated, the OSD signal that the OSD signal producing module (not illustrated) outputs to the video processing module can reflect the video output such that a half of the screen can be formed by each of the OSD signal of the OSD signal producing module and the output of the graphic processing module to display (reproduce) both the OSD signal of the OSD signal producing module and the output of the graphic processing module. The graphic processing module can reflect the video output such that the output of the ODS signal producing module can be displayed (reproduced) by setting a parameter called α blending while superimposed on a normal video display in a translucent state (part of the normal video signal can be transmitted). A caption signal can be superimposed on the video output when the caption can be displayed while the graphic processing module or content is associated with the caption signal.

Although the detailed description except part of the main control module 6 is omitted because the main configuration and function are widely well known, the main control module 6 includes a program data base processing module 6A, a viewing control module 6B, a memory module 6C, a display control module 6D, and an MPU (microprocessor or core processor) 6E.

The program data base processing module 6A is used in a function of accepting programmed video-recording according to the display of the EPG or information on content obtained by the EPG.

The viewing control module 6B is used to receive content (selection of channel or CAS entity) by any tuner according to ID (identification code) retained by the CAS card or obtain management information (information on CAS entity) included in the content.

The memory module 6C includes a read-only memory (ROM) in which an operating program is stored, a random access memory (RAM) that provides a work area, and a nonvolatile memory (NVM) in which various kinds of setting information and a control program are stored. The obtained EPG data is also stored in the RAM. Programming information for realizing the programmed video-recording and channel (CAS) information that is previously viewed or video-recorded are stored in the nonvolatile memory (NVM).

The display control module 6D controls the production of the OSD signal that should be output to the A/V output module 5, and controls the display (icon display or various displays in a graphical user interface [GUI]) of the image that is displayed as the manipulation guide.

The main control module 6 controls the reception processing module 1, the CAS control module 2, the signal selection module 3, the decode module 4, and the A/V output module 5, and manages the delivery and receipt of the signal between modules.

The main control module 6 controls each module such that the manipulation information input by the manipulation module (not illustrated) or the manipulation information delivered from the remote controller (not illustrated) reflects manipulation contents corresponding to remote controller input received by the remote controller receiving module (not illustrated), and the main control module 6 executes a start-up program to set a standby state for preparing the next input or programmed video-recording according to the program stored in the ROM included in the memory module 6C.

Based on the control program stored in the ROM, the main control module 6 performs defect site detection, unrecorded region detection, video-recording information recording position setting, UDF recording, and A/V address setting to the recording medium possessed by the recording and reproducing control module 7. The main control module 6 includes various signal processing blocks in order to realize predetermined operation or processing. Examples of the signal processing block include a directory detecting unit, a VMG (video management information) producing unit, a copy-related information detecting unit, a copy and decryption information processing unit (RDI processing unit), a packet header processing unit, a sequence header processing unit, an aspect ratio information processing unit, an edit management information control unit that processes the management information in performing editing, a video-recording management information control unit that processes the management information in performing the video-recording.

The main control module 6 retains pieces of information such as [start date and time], [end date and time], [channel], and [rate] on the set "programmed video-recording" to realize the set programmed video-recording.

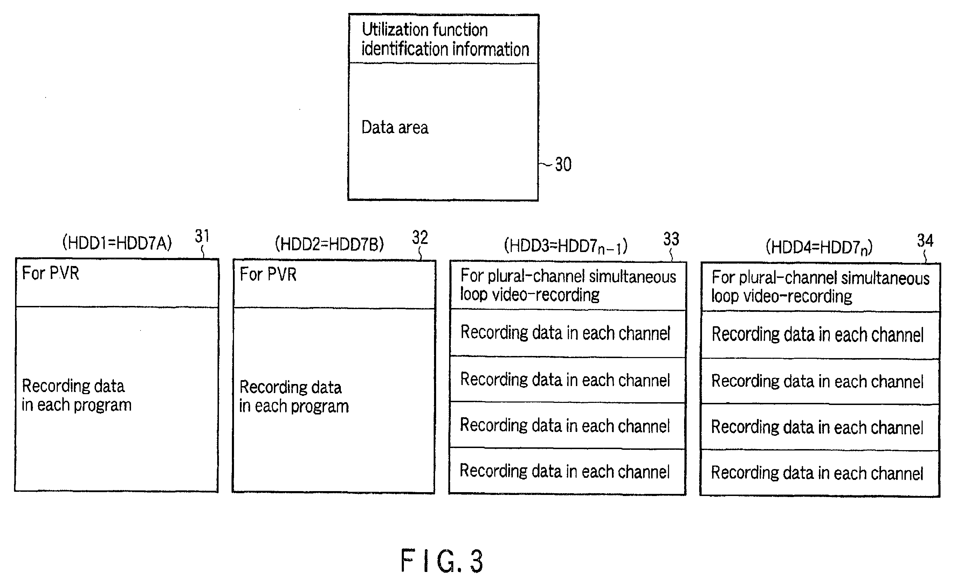

Although described in detail with reference to FIG. 3, the main control module 6 controls changes of content that should be recorded in, for example, four sets of hard disk drive (HDD, a large-capacity recording device, that is, recording module) 7A to 7D included in the recording control module 7 and the recording method (use in each recording module) thereof.

The main control module 6 obtains section information included in the TS, various kinds of data (service information), electronic program guide (EPG) information, program attribute information (program category), and caption information from the decoded signal.

Although described with reference to FIG. 2, the management information (information on CAS entity) attached to content (stream) is previously separated from the TS by the TS separation module included in the reception processing module 1. The information on the CAS entity can be extracted from an IPMP descriptor or an IPMP tool ID, which is included in content provided by the CAS entity, and the information on the CAS entity is specified by, for example, ECM (for MPEG-2 standard) or EMM (contract information on charged broadcasting). Using the obtained information on the CAS entity, the CAS control module 2 effectively sets which of the first standard card (blue card) and the second standard card (red card) is used in receiving the fed content source, that is, the CAS or channel.

The contract information that is retained by each of the red card and the blue card is previously checked along with the kind of the card during the start-up processing (in executing the start-up program) performed by the main control module 6.

Although depending on a recording mode (rate), the recording and reproducing control module 7 includes the HDD (recording module) in which content can be video-recorded for about 100 hours, and retains the received content or the fed information (video and sound or still image). At least two sets of recording modules (HDDs) may be prepared. The four sets of recording modules (7A to 7D) are provided in the recording and reproducing control module 7 of FIG. 1. When the plural recording modules are prepared, the recording modules may be identical to one another or differ from one another. For example, the recording module may be a semiconductor memory (memory card), or the HDD and the semiconductor memory may commonly be used.

The recording modules 7A, 7B, 7n-1(7C) and 7n(7D) are roughly classified into a first group and a second group (usually, 1:1 in terms of recording capacity ratio). The first group is the video-recording (recording) in which the user specifies recording conditions such as program video-recording date, program start time, program end time, the presence or absence of weekly/daily repetition, a channel (CAS entity) through which the program is broadcasted, a rate, and the recording module in which the video-recording is performed in each program of the video-recording target. The first group is used in personal video recording (PVR, first recording method). In the second group, a higher priority is placed on an operating mode set by the user compared with the broadcasting time (start time, end time, and video-recording date) specific to the program. The second group is used in loop recording (second recording method) in which video-recording is repeatedly performed under given conditions. Accordingly, for example, the recording modules 7A and 7B are allocated to the PVR, and the recording modules 7C and 7D are allocated to the loop recording. The PVR is suitable to record the video for the purpose of permanent storage.

More specifically, in the first recording method, the video-recording of any channel or input program is performed in response to a video-recording start instruction provided by the user, for example, the video-recording start instruction provided from a video-recording start button (not illustrated) or a remote controller (not illustrated) according to the video-recording of any channel or input program and start time and end time. When the video-recording is started by the video-recording start signal from the video-recording start button or the remote controller (not illustrated), the video-recording is continued until a video-recording stopping (end) signal is fed from the video-recording stopping (end) button (not illustrated) or the remote controller (not illustrated). The control may be combined such that the video-recording is automatically aborted at the time constant time, for example, 6 hours elapses.

More specifically, in the second recording method, the loop video-recording of the program corresponding to at least one channel signal is performed in the set recording time slot. For example, when the remaining recording capacity of the recording region runs out after the program of any channel is sequentially recorded in the recording modules 7C and 7D, the recorded programs are deleted and overwritten beginning with the chronologically oldest program. That is, in the second recording method, the video-recording is simultaneously (concurrently) performed to the programs of the channels when at least two channels are specified to the programs of constant periods and the predetermined number of channels according to the set operating condition on given conditions, for example, 10:00 a.m. to noon every day and channels (CAS entity) A to D. The video-recording is performed to the program of the channel when the number of specified channels is one, and the video-recording is repeatedly performed while the recorded programs are overwritten beginning with the chronologically oldest program when the remaining recording capacity runs out. In each recording module, the recording region may previously virtually be divided according to the number of channels to be recorded. At this point, for example, the recording region may be divided into four or two based on the recording capacity.

When the program recorded in the recording modules 7A and 7B allocated to the PVR overlaps the program recorded in the recording modules 7C and 7D allocated to the loop recording, the program desired by the user remains securely in the PVR by simultaneously executing both the programs even if the program recorded in the loop recording is deleted by the update. Alternatively, for the overlapping, the PVR is aborted and the PVR of the program recorded in the loop recording may be performed.

Under the control of the main control module 6, the recording and reproducing control module 7 includes a PVR function of performing the recording in one program unit and a simultaneous loop video-recording function of simultaneously performing the loop video-recording to the plural channels, and one of the HDDs 7A to 7D is individually used in each function (described in detail later with reference to FIGS. 3 and 6 to 8).

When the connection of each of the HDDs 7A to 7D is detected, the recording and reproducing control module 7 reads pieces of utilization function determination information set to predetermined areas of the HDDs 7A to 7D and determines which function uses the HDD (7A to 7D) .

When a utilization function determination unit (30), i.e., 'utilization function determination information table' 30 detects that the pieces of utilization function determination information are not set to the predetermined areas of the HDDs 7A to 7D while the connection of each of the HDDs 7A to 7D is detected, in selecting the use function specified by the user, the recording and reproducing control module 7 also includes a function of setting the information specifying the selected function as the utilization function determination information to the predetermined area.

FIG. 2 illustrates the detailed reception processing unit of the recording and reproducing apparatus of FIG. 1.

As schematically described above, in the reception processing module 1 of the recording and reproducing apparatus 101, content of any number of channels can be received via input ends of content provided by distributors through an antenna (not illustrated) for spatial waves, that is, BS/CS digital broadcasting, terrestrial digital broadcasting, and terrestrial analog broadcasting or an optical fiber network. The reception processing module 1 can receive the program (content) of any channel that is received by the user according to the reception permission information in which information retained by the CAS card, for example, the contract information or a payment status for past billing reflects content supplied by the BS/CS digital broadcasting, the terrestrial digital broadcasting, or the CAS that is the distributor.

In FIG. 2, because the CAS control module 2 can process the two CAS cards, the CAS control module 2 can simultaneously receive up to four streams (content). Although each CAS card preferably includes at least one red card, all the kinds of the cards may be identical to one another. The CAS control module 2 reads the card ID during the start up, and compares the card ID to the ID list to distinguish between the red card (second standard card) and the blue card (first standard card).

One of the tuner modules 11a, 11b, ..., 11n-1, and 11n (n is a positive integer) tunes the signal (stream supplied through the broadcasting wave or the optical fiber network by the distributor) received by the reception processing module 1 of FIG. 2, and each of corresponding TS separation modules 12a, 12b, ... , 12n-1, and 12n (n is a positive integer) separates the management information including information on the content source, that is, the information on the CAS entity and the contract information prepared by the CAS from content, that is, the video signal and the sound (audio) signal, which are supplied to the subsequent signal processing module 3.

The information on the CAS entity and the contract information prepared by the CAS, which are separated by each of the TS separation module 12a, 12b, ... , 12n-1, and 12n, are supplied to each of corresponding decryption modules 13a, 13b, ... , 13n-1, and 13n (n is a positive integer) and used to unlock (decrypt) encryption key locked on the CAS side.

FIG. 3 illustrates an example of the 'utilization function determination information table' managed by the recording control module of the recording and reproducing apparatus of FIG. 1.

As illustrated in FIG. 3, when the recording modules 7A (31) and 7B (32) are allocated to the use of the PVR while the recording modules 7C (33) and 7D (34) are allocated to the use of the loop video-recording, a 'utilization function determination information table' 30 in which the 'utilization function determination information' is retained retains the data concerning the use allocated to each of the recording modules.

When the connection of each of the HDDs 7A to 7D is detected, the recording and reproducing control module 7 reads the pieces of utilization function determination information set to predetermined areas ('utilization function determination information table') of the HDDs 7A to 7D and determines which function uses the HDD (7A to 7D).

When the utilization function determination unit (30) detects that the pieces of utilization function determination information are not set to the predetermined areas ('utilization function determination information table') of the HDDs 7A to 7D while the connection of each of the HDDs 7A to 7D is detected, in selecting the use function specified by the user, the recording and reproducing control module 7 also includes the function of setting the information specifying the selected function as the utilization function determination information to the predetermined area ('utilization function determination information table').

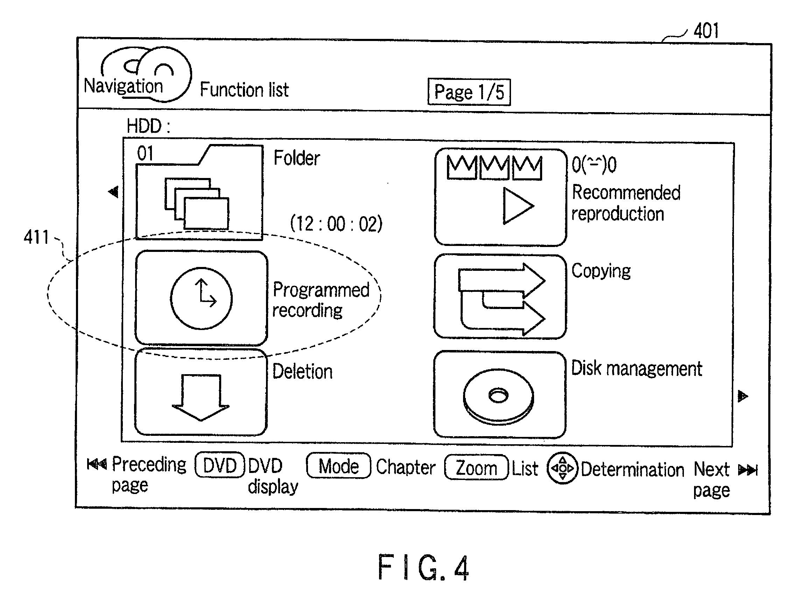

In the loop video-recording, the video-recording of content (stream) provided in the specific time slot or all the times is always performed in each registered channel (CAS entity). When the user performs certain control (manipulation) input with the remote controller (not illustrated) or manipulation unit (not described in detail), a display output signal that can display a [looking navigation <function list>] screen is output to the video output 8. FIG. 4 schematically illustrates "display 401" that is the video displayed by the display output signal. A video similar to that of the "display 401" is displayed when the display device is integrally provided like the television receiver. The example of FIG. 4 corresponds to the display output (signal) that can provide a display example in the state in which the display device (monitor device) is connected to the video output 8 or the television receiver in which the state receiving device is integral with the monitor device. Occasionally the actual display varies according to various factors such as a size, an aspect ratio, and resolution of the monitor device (display device).

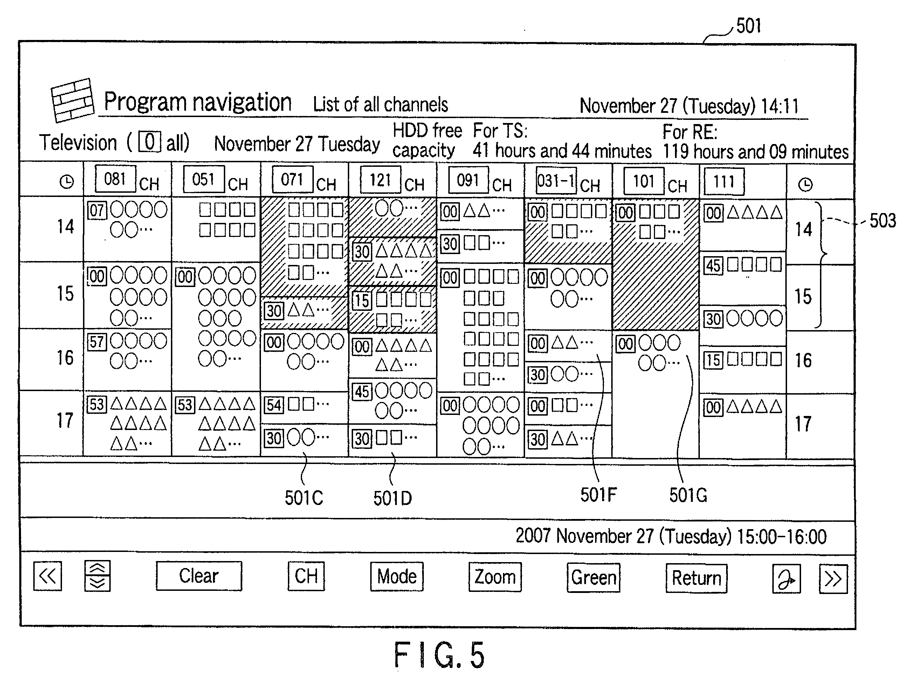

For example, when a signal is fed by the manipulation of the remote controller in order to select "display 411" that is an example of [programmed video-recording] displayed on the display device (not illustrated), a display output signal that can display "display 501" is output to the video output 8 as illustrated in FIG. 5. The "display 501" is a display example of [program navigation <list of all channels>] screen.

In the display 501 of [program navigation <list of all channels>] of FIG. 5, the channel and time slot to which the "programmed video-recording" is already set are displayed such that the user can distinguish the already set channel and time slot from others by display methods such as 'inversion' or 'background coloring'. In the example of FIG. 5, a channel [071] of a column 501C, a channel [121] of a column 501D, a channel [031] of a column 501F, and a channel [101] of a column 501G, are programmed for two hours from 14:00 to 16:00 (display 503 of [plural channel programmed]).

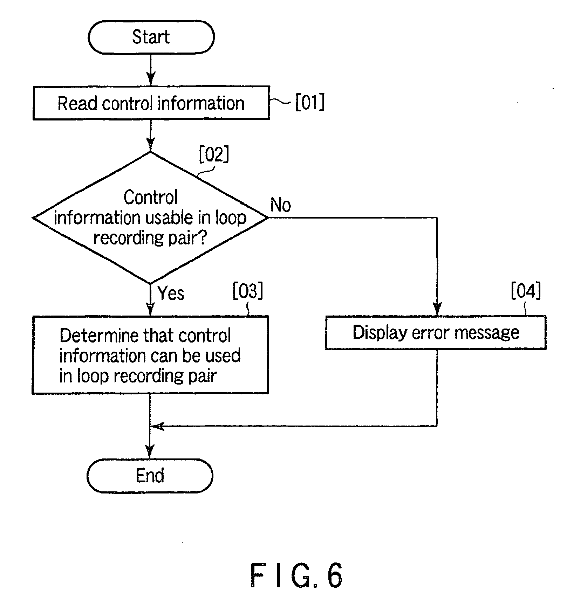

On the other hand, a 'pairing function' unique to the loop video-recording applied to the recording module 7C and 7D is provided between the recording modules 7C and 7D used in the loop video-recording and the recording modules 7A and 7B used in the PVR recording, and a check whether the control information can be used in a loop recording pair is made prior to video-recording start as illustrated in FIG. 6.

More specifically, in FIG. 6, the 'utilization function identification information table' of FIG. 3 is referred to, and the control information is read (block [01]).

Then the check whether the control information is the loop recording pair is made (block [02]). When the control information is the loop recording pair (YES in block [02]), the determination that the control information can be used in the loop recording pair is made (block [03]).

On the other hand, when the control information is not the loop recording pair (NO in block [02]), an error message is displayed (block [04]).

In the recording and reproducing control module 7, when the connection of each of the HDDs 7A to 7D is detected, the utilization function determination information (for example, meta-information or header information) set to a predetermined recording area of each of the HDDs 7A to 7D is read, a determination whether the HDDs (7A to 7D) are used as the same function is made, and a determination whether pairing information indicating that the HDDs (7A to 7D) are simultaneously used as a set is made. The HDDs (7C and 7D with respect to 7A and 7B) having the correct pairing information is permitted to be used as a set. An error message notifying the user of the status is made when the incorrect information is detected.

Some users mainly use the loop video-recording while seldom using the PVR recording, and other users mainly use the PVR recording while seldom using the loop video-recording.

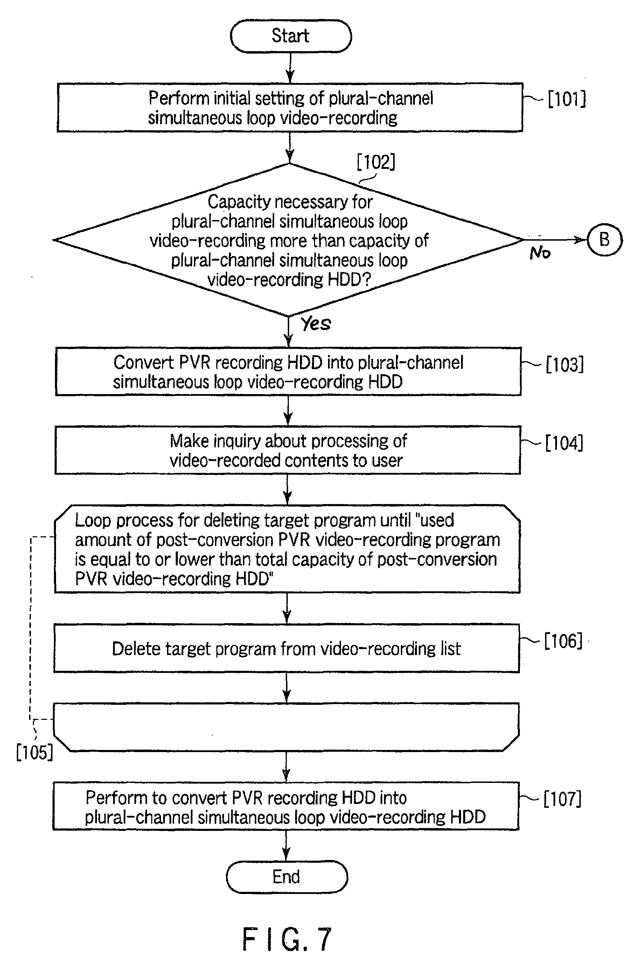

FIG. 7 illustrates an example of a method for changing the use in each group of the recording modules (HDDs) 7A to 7D in the recording and reproducing apparatus that can perform the loop recording, that is, the plural-channel simultaneous loop video-recording.

First, an initial setting of plural-channel simultaneous loop video-recording is read from the nonvolatile memory (NVM) of the memory module 6C (block [101]).

A check whether a capacity (free capacity) necessary for the plural-channel simultaneous loop video-recording is more than the sum of capacities in the group of recording modules (HDDs) for the loop video-recording function (whether the free capacity runs out) is made (block [102]).

When the capacity (free capacity) necessary for the plural-channel simultaneous loop video-recording is more than the sum of capacities in the group of recording modules (HDDs) for the loop video-recording function (YES in block [102]), work for converting the PVR recording HDD into plural-channel simultaneous loop video-recording HDD is performed (block [103]).

In this case, it is necessary to delete some content retained by the PVR video-recording HDD, that is, some already-video-recorded content, and inquiry about the processing of the already-video-recorded content is made to the user (GUI makes a request to delete some content (block [104])).

The user is asked to 'delete the already-video-recorded content from a list (play list)' until a "used amount of post-conversion PVR video-recording program is equal to or lower than the total capacity of post-conversion PVR video-recording HDD", and a process of deleting the target program (block [106]) is repeated (loop [105]). After block [106]), i.e., "used amount of post-conversion PVR video-recording program is equal to or lower than the total capacity of post-conversion PVR video-recording HDD", converting the PVR recording HDD into plural-channel simultaneous loop video-recording HDD is performed (block [107]).

On the other hand, when the capacity (free capacity) necessary for the plural-channel simultaneous loop video-recording is lower than the sum of capacities in the group of recording modules (HDDs) for the loop video-recording function (NO in block [102]), a check whether surplus amount (free capacity) exists in the plural-channel simultaneous loop video-recording HDD is made (block [111]).

When the surplus amount (free capacity) exists in the plural-channel simultaneous loop video-recording HDD (YES in block [111]), a check whether content on which the loop video-recording (multi-channel video-recording) is performed exists in the reset HDD is made (block [112]).

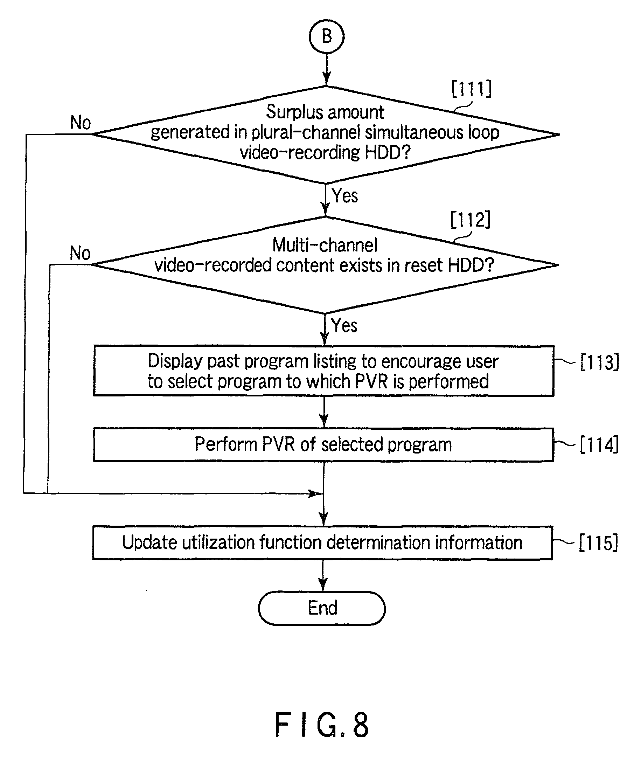

When the content on which the loop video-recording (multi-channel video-recording) is performed exists in the reset HDD, a "past program listing" of FIG. 8 is referred to, and the user is asked to specify the program to which the PVR is performed in the already-video-recorded content (block [113]).

The PVR of the selected "content (program) video-recorded by the loop video-recording function" is performed (block [114]).

Finally, the use of the utilization function determination information', that is, the 'utilization function identification information table' retained by each of the recording modules (7A to 7D) is updated (block [115]).

That is, in the recording and reproducing control module 7, content can be recorded in each of the recording modules (HDDs 7A to 7D) by the PVR function (recording) and the loop video-recording function (recording), each function is realized by the use of plural HDDs, and the PVR function to the simultaneous loop video-recording or the simultaneous loop video-recording to the PVR function can be changed by the manipulation of the user. When the use is changed between the PVR function and the simultaneous loop video-recording, the post-change utilization function determination information is set to the predetermined area ('utilization function identification information table'). One of the features of the embodiment is that the HDDs (7A to 7D) are separately used in each of the PVR function and the loop video-recording function while the plural HDDs (7A and B or 7C and 7D) are used in one function.

In performing the initial setting of the plural-channel simultaneous loop video-recording function to the nonvolatile memory (NVM) of the memory module 6C, when a difference between the data capacity necessary for the plural-channel simultaneous loop and the total capacity of HDDs for plural-channel simultaneous loop video-recording function is more than the capacity of one to plural HDDs to generate the surplus HDD, the recording and reproducing control module 7 notifies the user of that effect, and rewrites the utilization function determination information on the surplus HDD into the HDD for the PVR video-recording function. When the video-recorded program data exists in the surplus HDD, the screen on which the user is caused to select the deleted program data, and the program data that is not deleted can be converted into the PVR-video-recorded program.

In performing the initial setting of the plural-channel simultaneous loop video-recording function to the nonvolatile memory (NVM) of the memory module 6C, when the data capacity necessary for the plural-channel simultaneous loop is more than the total capacity of HDDs for plural-channel simultaneous loop video-recording function, the recording and reproducing control module 7 notifies the user of that effect, and the utilization function determination information on the HDD for the PVR video-recording function can be rewritten into the HDD for plural-channel simultaneous loop video-recording function to secure the necessary HDD capacity. When the program data video-recorded in the HDD for the PVR video-recording function exists, the screen on which the user is caused to select the deleted program data is displayed, and the user is caused to select the deleted program data until the necessary capacity is secured, which allows the capacity to be secured.

Information used to identify the recording method and information on the pairing are recorded in a predetermined area of the HDD, and a connection error can be prevented by the proper use of the combination based on the information used to identify the recording method and information on the pairing when the HDD can be added or replaced.

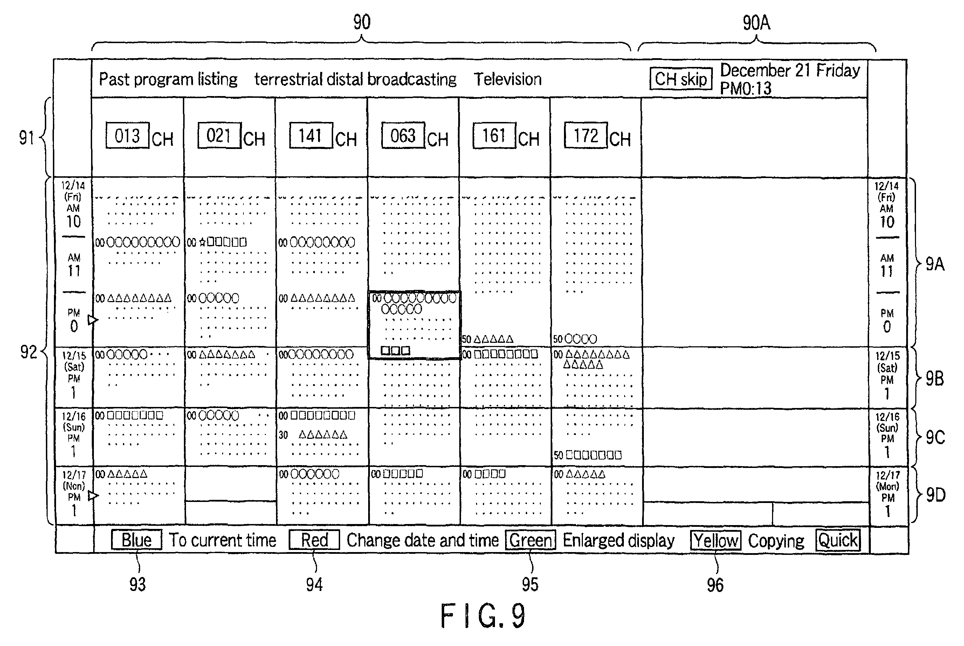

FIG. 9 illustrates an example of the display output signal that is displayed as a "past program listing" in which the program video-recorded by the loop video-recording function can be referred to, and FIG. 9 schematically illustrates the state in which the "past program listing" is displayed on the display device.

In FIG. 9, "display 901" illustrating a display example of a "past program listing" includes an already-video-recorded content list display field 90, a channel (CAS entity) display field 91, and a time slot display field 92.

The "display 901" includes "display 93" of a blue button, "display 94" of a red button, "display 95" of a green button, and "display 96" of a yellow button. The "display 93" displays a common mode input key (button) of the remote controller (not illustrated), that is, the mode or operation determined by the manipulation input from the 'blue button' of the remote controller. The "display 94" displays the mode or operation determined by the manipulation input from the 'red button' of the remote controller. The "display 95" displays the mode or operation determined by the manipulation input from the 'green button' of the remote controller. The "display 96" displays the mode or operation determined by the manipulation input from the 'yellow button' of the remote controller. The already-video-recorded content list display field 90 is associated with a blank field 90A according to the status of the loop video-recording. On the other hand, the time slot display field 92 includes "display 9A", "display 9B", "display 9C", and "display 9D". The "display 9A" displays the video-recording status of a specific 'day' (on which attention is focused). The "display 9B" displays the video-recording status of the next 'day'. The "display 9C" displays the video-recording status of the 'day' after next. The "display 9D" displays the video-recording status of three days later.

In the "past program listing" of FIG. 9, the metadata or header information indicating the loop video-recording is attached when content on which the loop video-recording is performed are recorded in the recording modules 7A to 7D (in the embodiment, recording modules 7C and 7D), so that the content is distinguished from content video-recorded by the 'programmed video-recording' in the normal PVR video-recording in order to facilitate the display as the "past program listing.

As described above, in the embodiment, that the user cannot properly perform the viewing by accidentally connecting the HDD set to the different recording method is prevented, and that reproduction cannot be performed even in the same recording method when a different HDD is used can be prevented.

The generation of the surplus HDD or generation of the lack of capacity depending on the capacity necessary for the plural-channel simultaneous loop video-recording can be prevented.

Therefore, the large amount of capacity that can be used in the PVR video-recording is provided to the user who mainly uses the PVR video-recording rather than the loop video-recording, which allows more programs to be video-recorded. On the other hand, the necessary recording capacity can be provided to the user who mainly uses the loop video-recording.

The information used to identify the recording method and the information on the pairing are recorded in a predetermined area of the HDD, and the connection error can be prevented by the proper use of the combination based on the information used to identify the recording method and information on the pairing when the HDD can be added or replaced.

In one embodiment, that the user cannot properly perform the viewing by accidentally connecting the HDD set to the different recording method is prevented, and that reproduction cannot be performed even in the same recording method when a different HDD is used can be prevented.

The generation of the surplus HDD or generation of the lack of capacity depending on the capacity necessary for the plural-channel simultaneous loop video-recording can be prevented.

Therefore, the large amount of capacity that can be used in the PVR video-recording is provided to the user who mainly uses the PVR video-recording rather than the loop video-recording, which allows more programs to be video-recorded. On the other hand, the necessary recording capacity can be provided to the user who mainly uses the loop video-recording.

The information used to identify the recording method and the information on the pairing are recorded in a predetermined area of the HDD, and the connection error can be prevented by the proper use of the combination based on the information used to identify the recording method and information on the pairing when the HDD can be added or replaced.

## Claims

1. A recording and reproducing apparatus **characterized in that**,
when video-recording is performed by a recording method and another recording method that is different from the recording method, each recording module of a plurality of recording modules (7A-7D) is a semiconductor memory, a memory card, or a hard diole drive and is addable and replacable and is individually usuable in each of the recording method and the other recording method, loop video-recording of a program corresponding to at least one channel signal being performed during a set time slot in the recording method, the video-recording of the program being performed by a video-recording start instruction or a video-recording start and end at specified time in the other recording method, and the video-recording performed by the recording method of the loop video-recording and the video-recording performed by the other recording method are changeable among the recording modules, the recording and reproducing apparatus **characterized by** comprising:
a determination module (7) configured to determine which one or ones of the recording modules are used to record by the recording method and which one or ones of the recording modules are used to record by the other recording method according to utilization function determination information set to a predetermined area of each recording module when the connection of each recording module is detected; and
a pairing detection module (6) configured to allow the recording method and the other recording method in dependance upon pairing information, wherein the pairing information indicates that recording modules are simultaneously used, the pairing information being determined in dependance upon the utilization function determination information read from each of the recording modules when connection of each of the recording modules is detected, and if recording modules have correct pairing information the recording modules are used as a set.

2. The recording and reproducing apparatus according to claim 1, **characterized in that**
a plurality of recording modules are used as a group in each of the recording method of the loop video-recording and the other recording method.

3. The recording and reproducing apparatus according to claim 1, **characterized by** further comprising:
an error detection module (6) configured to determine the recording modules having correct pairing information are used as a set, and an error notification is provided when the correct pairing information cannot be detected.

4. The recording and reproducing apparatus according to claim 1, **characterized in that**
when a difference between a data capacity necessary for the recording method of the loop video-recording and the total capacity of recording modules used in the recording method of the loop video-recording is more than the sum of recording capacities of the recording modules used in the recording method of the loop video-recording to generate a surplus recording capacity, a user is notified of that effect, and the utilization function determination information on the surplus recording capacity can be rewritten into the video-recording of the other recording method.

5. The recording and reproducing apparatus according to claim 4, **characterized in that**
the user is caused to select a change to the video-recording of the other recording method with respect to a program recorded in the recording module in which the surplus recording capacity is generated, and the program that is required to be changed to the video-recording of the other recording method is retained as a program to which the video-recording is performed by the other recording method.

6. The recording and reproducing apparatus according to claim 4, **characterized in that**
when a data capacity necessary for the recording method of the loop video-recording is more than the total capacity of recording modules used in the recording method of the loop video-recording, a user is notified of that effect, the utilization function determination information on the recording module for the video-recording of the other recording method is rewritten into the video-recording performed by the recording method of the loop video-recording, and the surplus recording capacity can be used in the video-recording performed by the recording method of the loop video-recording.

7. A recording method **characterized in that**:
performing video-recording by a recording method for performing loop video-recording of a program corresponding to at least one channel signal during a set time slot and another recording method that is different from the recording method, performing video-recording of the program being performed by a video-recording start instruction or a video-recording start and end at specified time in the other recording method, **characterized in that** each recording module of a plurality of recording modules (7A-7D) is a semiconductor memory, a memory card, or a hard disk drive and is addable and replacable and is individually usable in each of the recording method and the other recording method, and the video-recording performed by the recording method of the loop video-recording and the video-recording performed by the other recording method are changeable among the recording modules, the recording method **characterized by** comprising:
determining which one or ones of the recording modules are used to record by the recording method and which one or ones of the recording modules are used to record by the other recording method according to utilization function determination information set to a predetermined area of each recording module when connection of the recording module is detected;
allowing the recording method and the other recording method in dependance upon pairing information, wherein the pairing information indicates that recording modules are simultaneously used, the pairing information being determined in dependance upon the utilisation function determination information read from each of the recording modules when connection of each of the recording modules is detected, and when the recording modules
detecting when each of the recording modules is connected, and if the recording modules have correct pairing information the recording modules are used as a set.

## Patentansprüche

1. Aufnahme- und Wiedergabevorrichtung, **dadurch gekennzeichnet, dass**
wenn eine Videoaufnahme durchgeführt wird durch ein Aufnahmeverfahren und ein anderes Aufnahmeverfahren, welches verschieden ist von dem Aufnahmeverfahren, jedes Aufnahmemodul einer Vielzahl von Aufnahmemodulen (7A-7D) ein Halbleiterspeicher, eine Speicherkarte, oder ein Festplattenlaufwerk ist, und hinzufügbar und ersetzbar ist und individuell verwendbar ist in jedem des Aufnahmeverfahrens und des anderen Aufnahmeverfahrens, Schleifen-Videoaufnahme eines Programms entsprechend mindestens einem Kanalsignal durchgeführt wird während einem gesetzten Zeitschlitz in dem Aufnahmeverfahren, die Videoaufnahme des Programms durchgeführt wird durch einen Videoaufnahmestartbefehl oder ein Videoaufnahmestart und -ende zu einer spezifischen Zeit in dem anderen Aufnahmeverfahren, und die Videoaufnahme, die durch das Aufnahmeverfahren der Schleifen-Videoaufnahme durchgeführt wird und die Videoaufnahme, die durch das andere Aufnahmeverfahren durchgeführt wird, änderbar sind unter den Aufnahmemodulen, wobei die Aufnahme- und Wiedergabevorrichtung **gekennzeichnet ist durch** Umfassen:
ein Bestimmungsmodul (7), das konfiguriert ist zum Bestimmen, welches oder welche der Aufnahmemodule verwendet werden zum Aufnehmen **durch** das Aufnahmeverfahren und welche oder welches Aufnahmemodul verwendet werden zum Aufnehmen **durch** das anderen Aufnahmeverfahren entsprechend einer Nutzungsfunktions-Bestimmungsinformation, gesetzt in einem vorbestimmten Bereich von jedem Aufnahmemodul, wenn die Verbindung von jedem Aufnahmemodul erfasst wird; und
ein Kupplungserfassungsmodul (6), das konfiguriert ist zum Erlauben des Aufnahmeverfahrens und des anderen Aufnahmeverfahrens in Abhängigkeit von Kupplungsinformation, wobei die Kupplungsinformation anzeigt, dass Aufnahmemodule simultan verwendet werden, wobei die Kupplungsinformation bestimmt wird in Abhängigkeit von der Nutzungsfunktions-Bestimmungsinformation, die von jedem der Aufnahmemodule gelesen wird, wenn eine Verbindung von jedem der Aufnahmemodule erfasst wird, und, wenn die Aufnahmemodule die korrekte Kupplungsinformation aufweisen, die Aufnahmemodule als ein Satz verwendet werden.

2. Aufnahme- und Wiedergabevorrichtung nach Anspruch 1, **dadurch gekennzeichnet, dass**
eine Vielzahl von Aufnahmemodulen als eine Gruppe verwendet werden, in jeder des Aufnahmeverfahrens der Schleifen-Videoaufnahme und des anderen Aufnahmeverfahrens.

3. Aufnahme- und Wiedergabevorrichtung nach Anspruch 1, **gekennzeichnet durch** ferner umfassen:
ein Fehlerbestimmungsmodul (6), das konfiguriert ist zum Bestimmen, dass die Aufnahmemodule mit korrekter Kupplungsinformation als ein Satz verwendet werden, und eine Fehlerbenachrichtigung bereitgestellt wird, wenn die korrekte Kupplungsinformation nicht erfasst werden kann.

4. Aufnahme- und Wiedergabevorrichtung nach Anspruch 1, **dadurch gekennzeichnet, dass**
wenn eine Differenz zwischen einer Datenkapazität, die benötigt wird für das Aufnahmeverfahren der Schleifen-Videoaufnahme, und der Gesamtkapazität von Aufnahmemodulen, die in dem Aufnahmeverfahren der Schleifen-Videoaufnahme verwendet werden, größer ist als die Summe von Aufnahmekapazitäten der Aufnahmemodule, die in dem Aufnahmeverfahren der Schleifen-Videoaufnahme verwendet werden, um eine Überschuss-Aufnahmekapazität zu erzeugen, ein Benutzer über diesen Effekt benachrichtigt wird, und die Nutzungsfunktions-Bestimmungsinformation auf der Überschuss-Aufnahmekapazität neu geschrieben werden kann, in die Videoaufnahme des anderen Aufnahmeverfahrens.

5. Aufnahme- und Wiedergabevorrichtung nach Anspruch 4, **dadurch gekennzeichnet, dass** verursacht wird, dass
der Benutzer Veranlasst wird eine Änderung in die Videoaufnahme des anderen Aufnahmeverfahrens auszuwählen, mit Bezug auf ein Programm, das in dem Aufnahmemodul aufgenommen ist, in welchem die Überschuss-Aufnahmekapazität erzeugt wird, und das Programm, das benötigt wird in die Videoaufnahme des anderen Aufnahmeverfahrens geändert zu werden, beibehalten wird als ein Programm, auf welches die Videoaufnahme durch das andere Verfahren durchgeführt wird.

6. Aufnahme- und Wiedergabevorrichtung nach Anspruch 4, **dadurch gekennzeichnet, dass**
wenn eine Datenkapazität, die benötigt wird für das Aufnahmeverfahren der Schleifen-Videoaufnahme, größer ist als die Gesamtkapazität der Aufnahmemodule, die in dem Aufnahmeverfahren der Schleifen-Videoaufnahme verwendet werden, ein Benutzer über diesen Effekt benachrichtigt wird, die Nutzungsfunktions-Bestimmungsinformation auf dem Aufnahmemodul für die Videoaufnahme des anderen Aufnahmeverfahrens neu geschrieben wird in die Videoaufnahme, die durch das Aufnahmeverfahren der Schleife-Videoaufnahme durchgeführt wird, und die Überschuss-Aufnahmekapazität kann in der Videoaufnahme verwendet werden, die durch das Aufnahmeverfahren der Schleifen-Videoaufnahme durchgeführt wird.

7. Aufnahmeverfahren, **gekennzeichnet durch**:
Durchführen von Videoaufnahme mittels eines Aufnahmeverfahrens zum Durchführen von Schleifen-Videoaufnahme eines Programms entsprechend mindestens einem Kanalsignal während eines gesetzten Zeitschlitzes und ein Aufnahmeverfahren, welches verschieden ist von dem Aufnahmeverfahren, Durchführen von Videoaufnahme des Programms, durchgeführt **durch** einen Videoaufnahmestartbefehl oder ein Videoaufnahmestart und -ende zu einer spezifizierten Zeit in dem anderen Aufnahmeverfahren, **dadurch** gekennzeichnet, dass jedes Aufnahmemodul einer Vielzahl von Aufnahmemodulen (7A-7D) ein Halbleiterspeicher, eine Speicherkarte, oder ein Festplattenlaufwerk ist und hinzufügbar und ersetzbar ist und individuell verwendbar ist in jedem des Aufnahmeverfahrens und des anderen Aufnahmeverfahrens, und die Videoaufnahme, durchgeführt **durch** das Aufnahmeverfahren der Schleifen-Videoaufnahme, und die Videoaufnahme, durchgeführt **durch** das andere Aufnahmeverfahren, änderbar sind unter den Aufnahmemodulen, wobei das Aufnahmeverfahren **gekennzeichnet ist durch** Umfassen:
Bestimmen, welches oder welche der Aufnahmemodule verwendet werden zum Aufnehmen **durch** das Aufnahmeverfahren und welche oder welches der Aufnahmemodule verwendet werden zum Aufnehmen **durch** das andere Aufnahmeverfahren entsprechend einer Nutzungsfunktions-Bestimmungsinformation, die zu einem vorbestimmten Bereich von jedem Aufnahmemodul gesetzt ist, wenn die Verbindung des Aufnahmemoduls erfasst wird;
Erlauben des Aufnahmeverfahrens und des anderen Aufnahmeverfahrens in Abhängigkeit von Kupplungsinformation, wobei die Kupplungsinformation anzeigt, dass Aufnahmemodule simultan verwendet werden, wobei die Kupplungsinformation bestimmt wird in Abhängigkeit von der Nutzungsfunktions-Bestimmungsinformation, die aus jeder der Aufnahmemodule gelesen wird, wenn eine Verbindung von jedem der Aufnahmemodule erfasst wird, und
Erfassen, wenn jedes der Aufnahmemodule verbunden ist, und, wenn das Aufnahmemodul korrekte Kupplungsinformation aufweist, die Module als ein Satz verwendet werden.

## Revendications

1. Appareil d'enregistrement et de reproduction **caractérisé en ce que**,
lorsqu'un enregistrement de vidéo se fait par une méthode d'enregistrement et par une autre méthode d'enregistrement qui est différente de la méthode d'enregistrement, chaque module d'enregistrement d'une pluralité de modules d'enregistrement (7A à 7D) est une mémoire à semi-conducteurs, une carte de mémoire ou un lecteur de disque dur et peut être ajouté et remplacé et est utilisable individuellement dans chacune de la méthode d'enregistrement et de l'autre méthode d'enregistrement, un enregistrement de vidéo en boucle d'un programme correspondant à au moins un signal de canal s'effectue pendant une tranche de temps fixée dans la méthode d'enregistrement, l'enregistrement de vidéo du programme s'effectue par une instruction de début d'enregistrement de vidéo ou un début et une fin d'enregistrement de vidéo à un moment spécifié dans l'autre méthode d'enregistrement, et l'enregistrement de vidéo effectué par la méthode d'enregistrement de l'enregistrement de vidéo en boucle et l'enregistrement de vidéo effectué par l'autre méthode d'enregistrement peuvent être changés parmi les modules d'enregistrement, l'appareil d'enregistrement et de reproduction étant **caractérisé en ce qu'**il comprend :
un module de détermination (7) constitué pour déterminer lequel ou lesquels des modules d'enregistrement sont utilisés pour enregistrer par la méthode d'enregistrement et lequel ou lesquels des modules d'enregistrement sont utilisés pour enregistrer par l'autre méthode d'enregistrement d'après une information de détermination de fonction d'utilisation placée dans une zone prédéterminée de chaque module d'enregistrement lorsque la connexion de chaque module d'enregistrement est détectée ; et
un module de détection d'appariement (6) constitué pour autoriser la méthode d'enregistrement et l'autre méthode d'enregistrement en fonction d'une information d'appariement, dans lequel l'information d'appariement indique que les modules d'enregistrement sont utilisés simultanément, l'information d'appariement étant déterminée en fonction de l'information de détermination de fonction d'utilisation lue dans chacun des modules d'enregistrement lorsque la connexion de chacun des modules d'enregistrement est détectée, et si les modules d'enregistrement ont une information d'appariement correct les modules d'enregistrement sont utilisés comme un ensemble.

2. Appareil d'enregistrement et de reproduction selon la revendication 1, **caractérisé en ce qu'**une pluralité de modules d'enregistrement est utilisée sous forme d'un groupe dans chacune de la méthode d'enregistrement de l'enregistrement de vidéo en boucle et de l'autre méthode d'enregistrement.

3. Appareil d'enregistrement et de reproduction selon la revendication 1, **caractérisé en ce qu'**il comprend en outre un module de détection d'erreur (6) constitué pour déterminer que les modules d'enregistrement ayant une information d'appariement correct sont utilisés comme un ensemble, et **en ce qu'**une notification d'erreur est fournie lorsque l'information d'appariement correct ne peut pas être détectée.

4. Appareil d'enregistrement et de reproduction selon la revendication 1, **caractérisé en ce que**, lorsque la différence entre la capacité en données nécessaire pour la méthode d'enregistrement de l'enregistrement de vidéo en boucle et la capacité totale des modules d'enregistrement utilisés dans la méthode d'enregistrement de l'enregistrement de vidéo en boucle est supérieure à la somme des capacités d'enregistrement des modules d'enregistrement utilisés dans la méthode d'enregistrement de l'enregistrement de vidéo en boucle en engendrant une capacité d'enregistrement en surplus, l'utilisateur est averti de ce fait, et l'information de détermination de fonction d'utilisation au sujet de la capacité d'enregistrement en surplus peut être réécrite dans l'enregistrement de vidéo de l'autre méthode d'enregistrement.

5. Appareil d'enregistrement et de reproduction selon la revendication 4, **caractérisé en ce que** l'utilisateur est amené à choisir un changement pour l'enregistrement de vidéo de l'autre méthode d'enregistrement en ce qui concerne un programme enregistré dans le module d'enregistrement dans lequel est engendrée la capacité d'enregistrement en surplus, et **en ce que** le programme qui doit être changé pour l'enregistrement de vidéo de l'autre méthode d'enregistrement est conservé en tant que programme suivant lequel l'enregistrement de vidéo est effectué par l'autre méthode d'enregistrement.

6. Appareil d'enregistrement et de reproduction selon la revendication 4, **caractérisé en ce que**, lorsque la capacité en données nécessaire pour la méthode d'enregistrement de l'enregistrement de vidéo en boucle est supérieure à la capacité totale des modules d'enregistrement utilisés dans la méthode d'enregistrement de l'enregistrement de vidéo en boucle, l'utilisateur est averti de ce fait, l'information de détermination de fonction d'utilisation au sujet du module d'enregistrement pour l'enregistrement de vidéo de l'autre méthode d'enregistrement est réécrite dans l'enregistrement de vidéo effectué par la méthode d'enregistrement de l'enregistrement de vidéo en boucle, et la capacité d'enregistrement en surplus peut être utilisée dans l'enregistrement de vidéo effectué par la méthode d'enregistrement de l'enregistrement de vidéo en boucle.

7. Procédé d'enregistrement **caractérisé par** :
l'exécution d'un enregistrement de vidéo par une méthode d'enregistrement pour effectuer un enregistrement de vidéo en boucle d'un programme correspondant à au moins un signal de canal pendant une tranche de temps fixée et par une autre méthode d'enregistrement qui est différente de la méthode d'enregistrement, l'exécution de l'enregistrement de vidéo du programme s'effectuant par une instruction de début d'enregistrement de vidéo ou un début et une fin d'enregistrement de vidéo à un moment spécifié dans l'autre méthode d'enregistrement, **caractérisé en ce que** chaque module d'enregistrement d'une pluralité de modules d'enregistrement (7A à 7D) est une mémoire à semi-conducteurs, une carte de mémoire ou un lecteur de disque dur et peut être ajouté et remplacé et est utilisable individuellement dans chacune de la méthode d'enregistrement et de l'autre méthode d'enregistrement, et **en ce que** l'enregistrement de vidéo effectué par la méthode d'enregistrement de l'enregistrement de vidéo en boucle et l'enregistrement de vidéo effectué par l'autre méthode d'enregistrement peuvent être changés parmi les modules d'enregistrement, le procédé d'enregistrement étant **caractérisé en ce qu'**il comprend :
la détermination de celui ou de ceux des modules d'enregistrement qui sont utilisés pour enregistrer par la méthode d'enregistrement et de celui ou de ceux des modules d'enregistrement qui sont utilisés pour enregistrer par l'autre méthode d'enregistrement d'après une information de détermination de fonction d'utilisation placée dans une zone prédéterminée de chaque module d'enregistrement lorsque la connexion de chaque module d'enregistrement est détectée ;
l'autorisation de la méthode d'enregistrement et de l'autre méthode d'enregistrement en fonction d'une information d'appariement, dans lequel l'information d'appariement indique que les modules d'enregistrement sont utilisés simultanément, l'information d'appariement étant déterminée en fonction de l'information de détermination de fonction d'utilisation lue dans chacun des modules d'enregistrement lorsque la connexion de chacun des modules d'enregistrement est détectée ; et
la détection de ce que chacun des modules d'enregistrement est connecté, et si les modules d'enregistrement ont une information d'appariement correct les modules d'enregistrement sont utilisés comme un ensemble.
